# EUROPEAN PATENT SPECIFICATION

(11) **EP 1 971 006 B1**
(45) Date of publication and mention of the grant of the patent: **03.03.2010**
(21) Application number: 07076090.5
(22) Date of filing: 14.12.2007
(51) Int. Cl.: H02G 3/12

(54) **Intallation box with movable spout**
Installationsdose mit beweglichem Ausguss
Boîtier d'installation avec verseur mobile

(30) Priority: 22.12.2006 NL 1033125
(43) Date of publication of application: 17.09.2008
(73) Proprietor: ABB B.V., 6716 AA Ede (NL)
(72) Inventor: Witte, Adriaan Marinus, 6716 AA Ede (NL)
(74) Representative: De Hoop, Eric

(56) References cited:
- EP-A- 1 467 454
- EP-A1- 0 961 376
- DE-A1- 2 525 255
- DE-A1- 4 428 997
- NL-A- 7 810 097

## Description

### BACKGROUND OF THE INVENTION

The invention relates to an installation box for electrical installations.

A known installation box comprises a circumferential wall with a recess in which, from inside, an insert piece with a spout can be placed. Hence the spout protrudes from the exterior of the box only after the insert piece has been placed. Such an installation box is applied in hollow walls which have been constructed with two spaced apart plasterboards. When installing the installation, the installation box without the spout is placed in one of the walls through an accurately measured hole in one of the walls, after which the spout is placed behind the wall from the inside. Here the spout may accommodate an end of a rigid or flexible tube between the walls.

DE-A-4428997 discloses an installation box and an insert piece in accordance with the preamble of claims 1 and 14, respectively.

In the afore-mentioned hollow wall with two plasterboards, the space between the walls offers sufficient tolerance both to accommodate the tube and to arrange the placement flange of the installation box closely against the wall. In case of composite walls with built-in channels, which usually are delivered in a prefabricated form, there is hardly any such tolerance. An electrician will therefore not use the known installation box for such walls.

It is an object of the present invention to provide an installation box with a spout that can be inserted from the inside, that can be suitable for several types of wall structures.

It is an object of the present invention to provide an installation box with several connection facilities of the spout to a surrounding tube.

### SUMMARY OF THE INVENTION

The invention provides, from one aspect, an installation box according to claim 1.

The installation box according to the invention can be applied in several types of wall structures, as the spout can be forced with respect to the installation box to a channel in the wall, wherein the position of the installation box with respect to the wall can remain unchanged. Examples of such wall structures are walls of plasterboard with cores of chipboard which are provided with channels, or massive wooden walls according to the Finnish architectural style, in which the channels have been drilled through the walls to lead the tubes through the wall.

The insert piece may optionally be applied for differently embodied installation boxes.

After the spout has been placed on a tube in a wall the installation box can be adjusted as yet with respect to the wall if the spout is resiliently movable with respect to the placement member.

In particiular the installation box can be adjusted in the wall in its placement direction if the spout in the placed condition of the insert piece is movable in a direction transverse to the plane of the installation opening of the installation box.

The spout may connect to a tube in the wall that is located deeper in a channel than the insertion depth of the installation box if the spout is movable with respect to the placement member to a position in which a sleeve of the spout is at least partially situated below the plane of the bottom wall of the installation box.

Preferably the spout is movable with an equally remaining spatial orientation with respect to the placement member.

In a simple embodiment the spout is connected to the placement member via a resilient strip or bending strip.

The resilient strip can yield in the direction of the resilient strip and transverse thereto if in the direction of the spout the resilient strip has a corrugated profile.

The resilient strip or bending strip may be part of a bottom plate of the insert piece, which bottom plate connects to the bottom wall of the installation box.

The insert piece can be placed securely, for instance by means of snapping, if the installation box comprises a recess having a continuous bounding edge in a portion of the bottom wall and the circumferential wall for accommodation of the placement member, wherein the placement member comprises one or more shoulder edges for a clamping engagement onto the bounding edge of the recess.

The movement of the spout with respect to the placement member may be restricted to one direction if the spout and the placement member comprise cooperating guides, preferably rectilinear guides, preferably tongue-and-groove guides for guiding the movement of the spout with respect to the placement member.

The insert piece can be fabricated by means of injection moulding if at one side the spout is connected to the placement member via a resilient strip or bending strip, wherein the resilient strip and the connection to the spout allow a movement of the spout with respect to the placement member for bringing the guides in cooperation. After the fabrication the guides can be made to cooperate. This may for instance also take place just before the actual placement of the installation box in a wall.

Preferably the spout and the placement member comprise cooperating stops for limiting a movement of the spout which movement takes place with respect to the placement member and which is guided by the guides. These stops may prevent the guides from unintentionally losing their cooperative relation again.

The installation box may prevent contamination in several positions of the spout with respect to the installation box if the spout comprises a sealing wall part which extends in movement direction and which is in placed condition of the insert piece intended to abut the inside of the circumferential wall of the installation box. The afore-mentioned stops at the spout may be situated at the sealing wall part then.

Preferably the placement member, the spout and preferably the resilient strip are formed as one piece.

For placement convenience the placement member may comprise a preferably ribbed grip lip for handing the insert piece, wherein the grip lip after placement in the installation box is preferably raised from the bottom of the installation box. With the grip lip the insert piece may optionally be taken out of the installation box from inside again. Preferably the grip lip is integrally formed with a side of the insert piece that faces away from the spout.

Preferably the insert piece is made of synthetic material, preferably by means of injection moulding.

The invention also relates to an insert piece that is apparently intended and suitable for the installation box according to the invention.

The invention furthermore provides, according to a further aspect, an insert piece for an installation box, according to claim 14. After insertion of the insert piece the spout can be forced toward a nearby tube because of the moving ability.

The aspects and measures described in this description and claims and/or shown in the drawings of this application may where possible also be used individually. Said individual aspects, such as the resiliently displaceable spout, may be the subject of divisional patent applications relating thereto. This applies in particular to the measures and aspects that have been described per se in the sub-claims.

### SHORT DESCRIPTION OF THE DRAWINGS

The invention will by way of example be elucidated on the basis of a number of exemplary embodiments shown in the attached drawings, in which:
figure 1 is a view in perspective, partially in cross-section, of an installation box that is provided with an insert piece with a spout according to the invention;
figure 2A and 2B show an end view and front view, respectively, in perspective of the insert piece according to figure 1;
figures 3A and 3B, respectively, show a front view in perspective of the insert piece according to figure 1, in a released condition;
fig. 4 shows a rear view in perspective of the insert piece according to figure 1, in an ultimate extended position;
figure 5 shows the installation box according figure 1, which yet without insert piece has been accommodated in a recess in a composite wall;
figure 6 shows the installation box in the wall according figure 4, with placed insert piece; and
figure 7 shows the installation box according figure 1, accommodated in a composite wall at the location of a more deepely arranged channel in the wall.

### DETAILED DESCRIPTION OF THE DRAWINGS

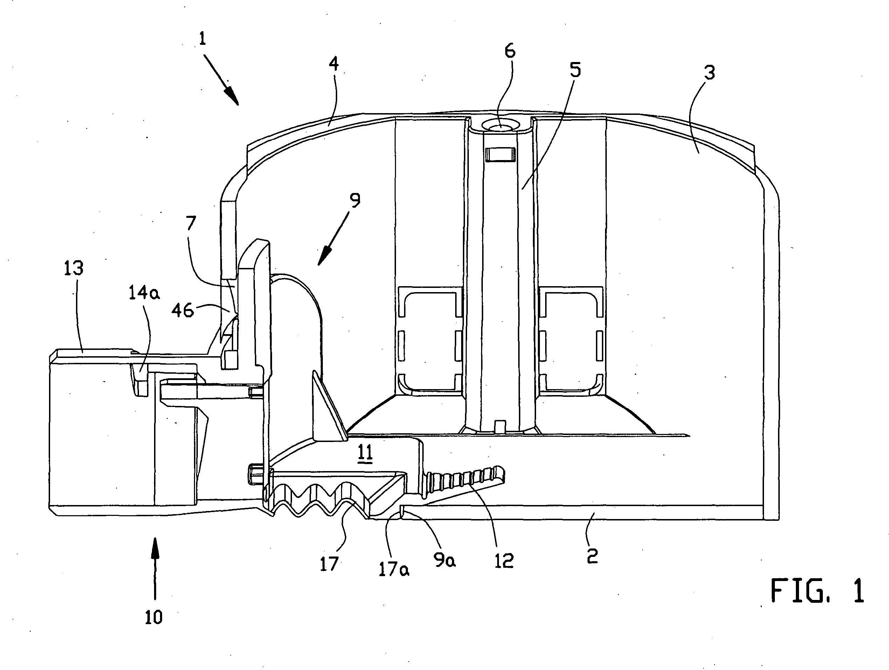

The synthetic installation box 1 as (partially) depicted in figure 1 comprises a bottom wall 2, a circumfrential wall 3 positioned around the bottom wall 2, with an upper edge 4 with outwardly protruding flanges and two (in the figure only one has been depicted) asseambly sleeves, connected to the side wall 3, with screw holes 6 for the installation of electrical switch material. The installation box 1 comprises in the bottom wall 2 and the circumferential wall 3 a continuous opening 9 in which a synthetic insert piece 10 has been placed.

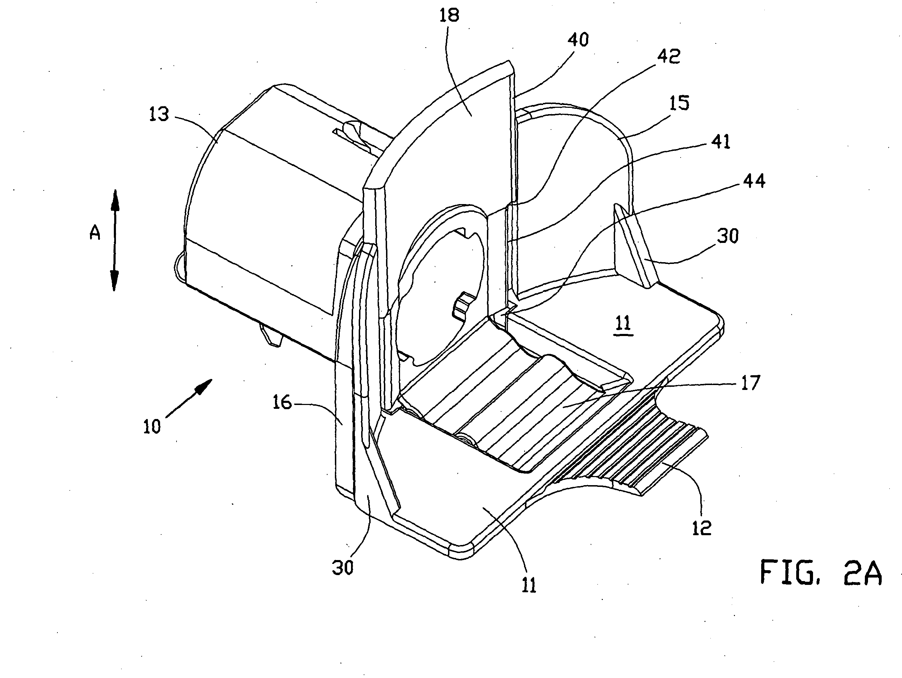

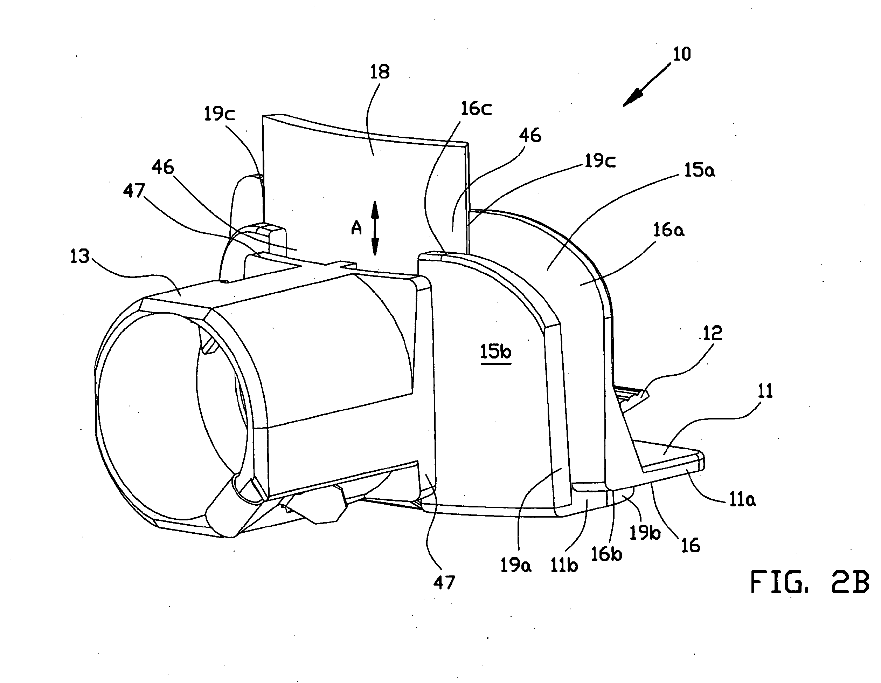

The insert piece 10, formed as one part, comprises a spout 13 for connecting an installation tube to the installation box 1. In the spout 13 barbs 14a, 14b have been provided for retaining both the smooth and the ribbed installation tubes. The insert piece 10 in the ready-for-use condition according to figure 1, is being depicted in more detail in figures 2A and 2B. The insert piece 10 comprises a flat bottom wall 11 with a ribbed grip 12 raised therefrom, and two side walls 15, which are rigidly connected to the bottom wall 11, which extend upward from the spout 13 with respect to the bottom wall 11. Between the bottom wall 11 and the side walls 15 reinforcements 30 have been formed to reinforce the - in this example right - angle between these walls 11, 15. The angle between the bottom wall 11 and the side walls 15 corresponds to the angle of the bottom wall 2 and the circumferential wall 3. The side walls 15 and the bottom wall 11 have been formed in two-fold, with each time integrally formed plates 15a, b and 11a, b, which form steps or rebates 16a, b, c, with edges 19a, b, c. The thickness of those edges 19a-c equals the thickness of the walls 2 3 of the installation box 1. The circumferential rebates 16a, b, c are destined for a self-locking, fitting engagement of the circumferential edge of the recess 9 in the walls 2, 3 of the installation box 1.

The insert piece 10 comprises a connecting wall 18 that has been fixedly connected to the spout 13. At the exterior of the insert piece 10 the side walls 15 and connecting wall 18 have a curvature that corresponds substantially to the curve of the circumferential wall 3 of the installation box 1. The connecting wall 18 comprises two first longitudinal side edges 40 which via a step or stop 42 change into two second longitudinal side edges 41, which define a narrower part of the connecting wall 18.

A square collar 47 has been integrally formed around the spout 13. The collar 47, with the connecting wall 18, defines a gap space or rebate 46, into which extend the edges of the side wall plates 15b that form the rebate 16c, wherein the longitudinal edges 40 of the connecting wall 18 abut the rebate edges 19c in a guiding manner, all this for guiding the connecting wall 18 and the spout 13 with respect to the side walls 15 only in direction A, transverse to the bottom wall 11. The second longitudinal side edges 41 extend freely through two recesses 44 in the bottom wall 11.

The lower side of the connecting wall 18 is connected to the bottom wall 11 by means of an integrally formed resilient strip 17. There the resilient strip 17 is rebound with respect to the side walls 15 and in its longitudinal direction of the bottom wall 11 towards the spout 13 it has a corrugated profile. The resilient strip 17 admits the displacement of the spout 13 in the direction A. Because of the corrugated profile the resilient strip 17 can either be stretched or compressed.

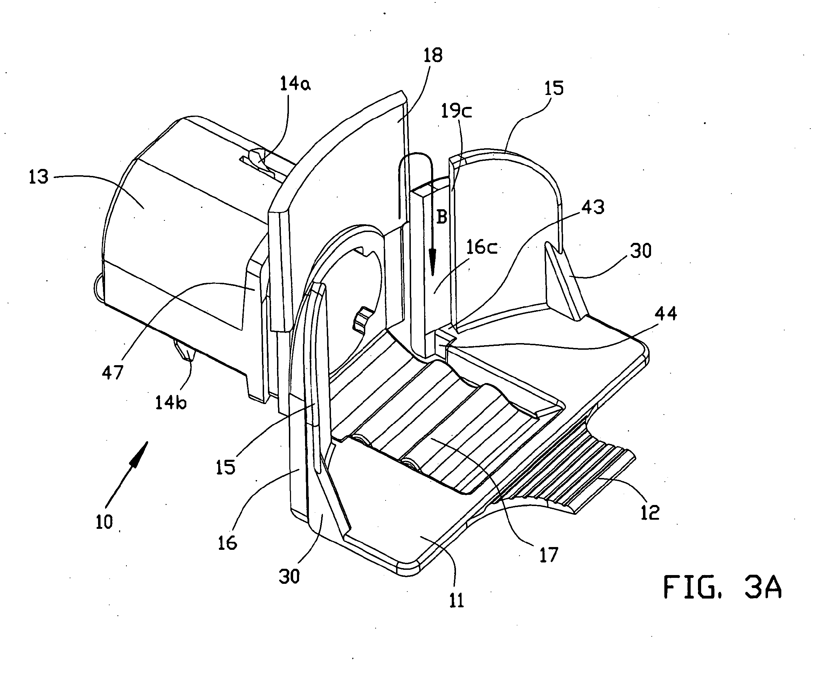

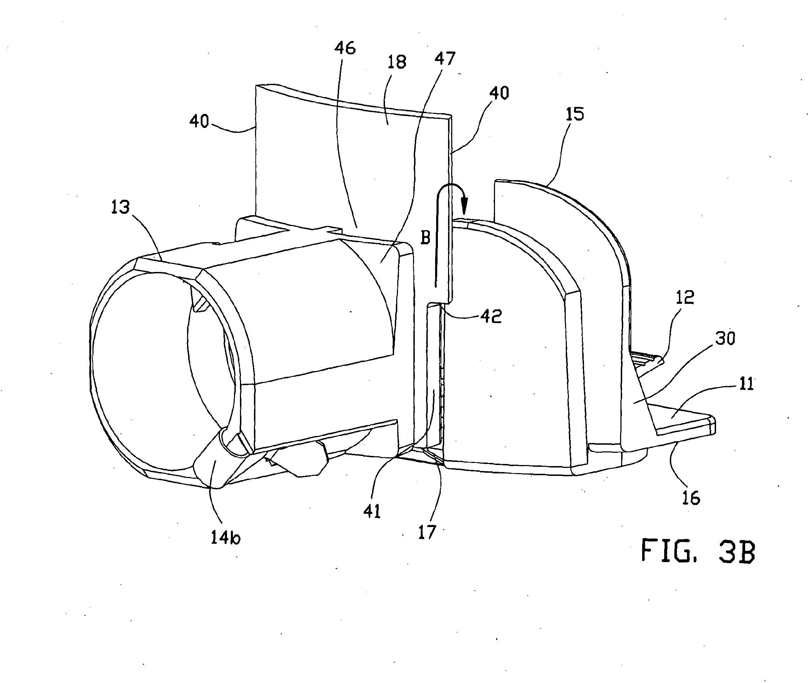

In figures 3A and 3B the insert piece 10 is depicted in a position in which the resilient strip 17 is released and the vertical edges of the side walls 15b, c do not engage the rebates 46. The insert piece 10 may be in this condition after its fabrication by injection moulding for instance. The resilient strip 17 is situated parallel to the bottom wall 11 then, and the connecting wall 18 protrudes some millimeters outward with respect to the side walls 15. In order to bring the insert piece 10 in the ready-for-use position, the connecting wall 18 with the stops 42 can be moved in the direction B along the rebate edges. Then the resilient strip 17 yields and it is subsequently compressed. At the downward movement in the direction of the bottom wall 11 the vertical edges of the side wall plates 15b then snap in the rebates 46 behind the connecting wall 18 in a fitting manner.

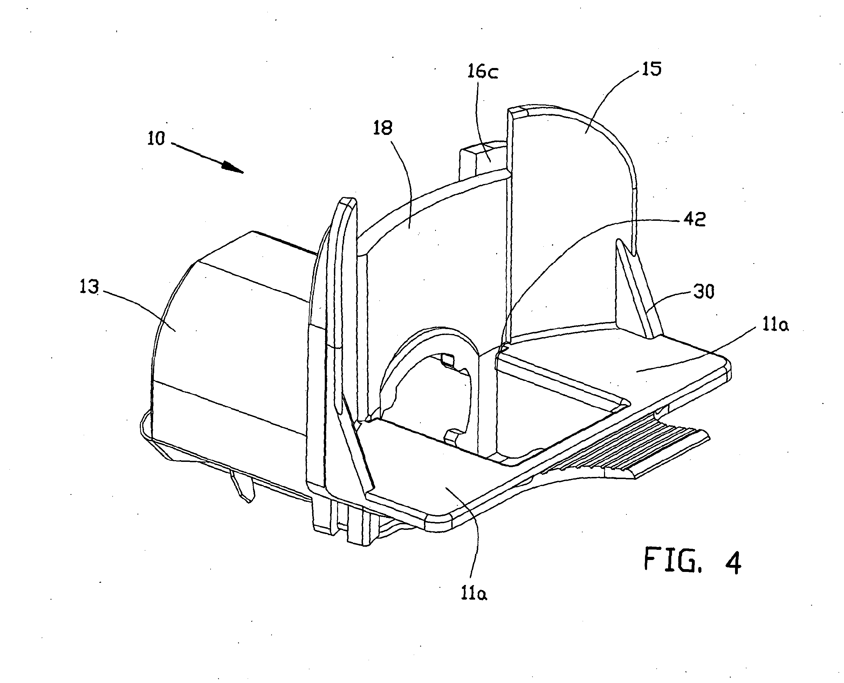

In figure 4 the spout 13 in the insert piece 10 is in the lowest position with respect to the bottom wall 11. The second longitudinal edges 41 protrude through the recesses 44 in the bottom wall 11 then, and the stops 42 abut against the bottom wall 11.

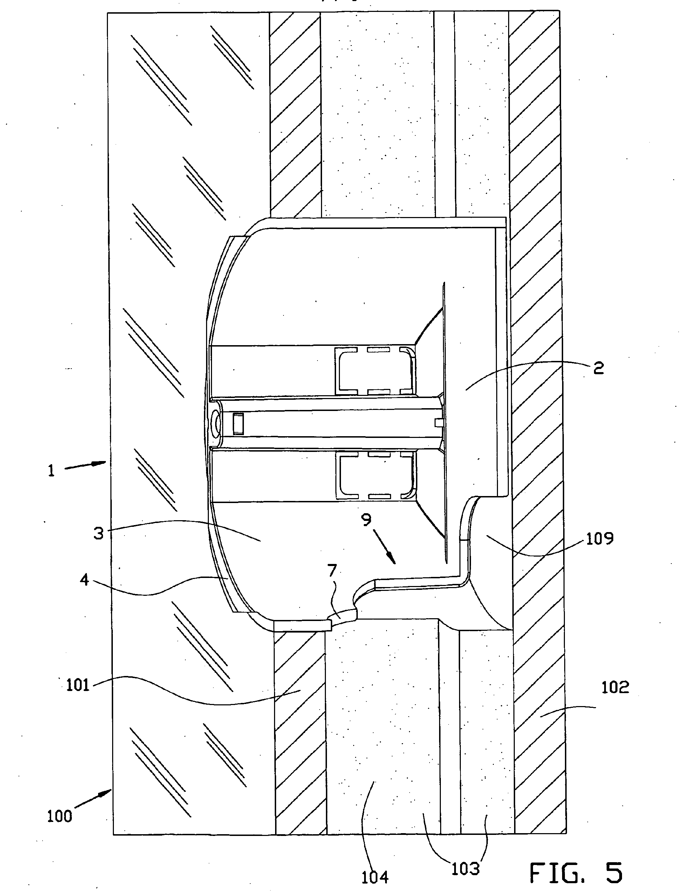

Figure 5 shows a composite wall 100 with a drilled recess 109 in which the installation box without the insert piece 10 has been placed. As is being shown, the recess 9 at the side of the placement edge 4 comprises a protrusion 7 for optionally accommodating the spout 13. The composite wall 100 comprises two plasterboards 101, 102, which have been secured against a fiberboard. When fabricating the wall 100 vertical channels 104 have been formed in the fiberboard 103 for the passage of installation tubes 108. These channels 104 extend through each time a part of the thickness of the fiberboard 103, such that the channels are parallel at a distance of about 20 cm and continually bound either the front plasterboard 101 or the rear plasterboard 102.

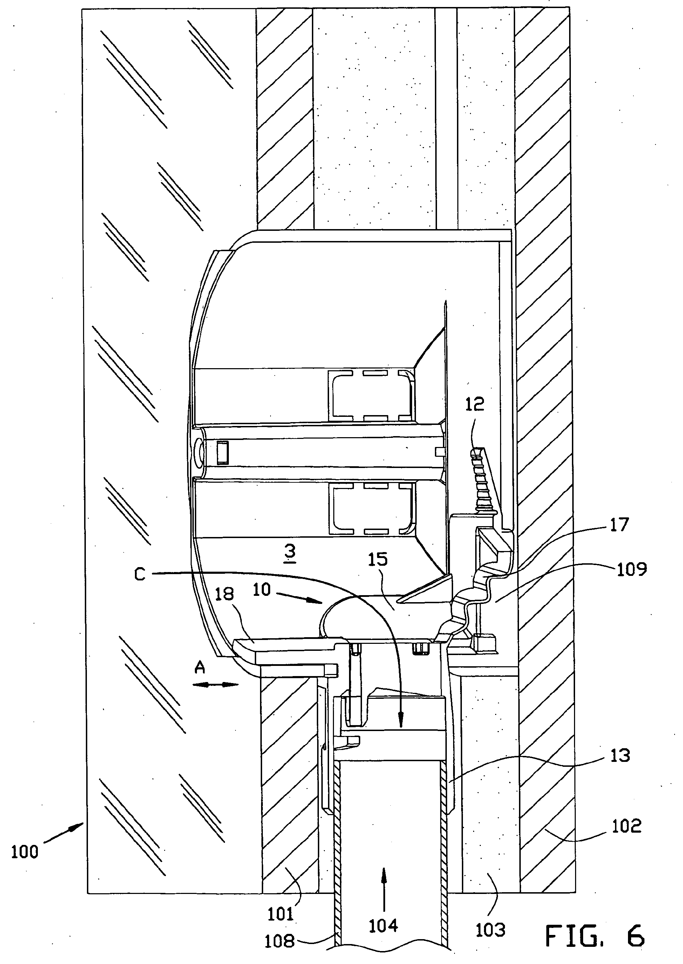

As shown in figure 6, after placing the installation box 2, the insert piece 10 (figures 2A and 2B) can be arranged in the recess 9 from the inside in direction C. Here the electrician holds the insert piece 10 by the lip 12. Then the shoulder 17a snaps within the edge 9a of the recess 9 in the bottom wall 2. The connecting wall 18 and the rebates 16b, c rest against the inner surface of the circumferential wall 3.

The spout projects into the channel 104 so as to accommodate the rigid installation tube 108 that is already present therein. Because of the resilient action of the resilient strip 17 the spout 13 can adapt in the direction A, independent from the relative location of the installation box 1, to the location of the channel 104 in the wall 100.

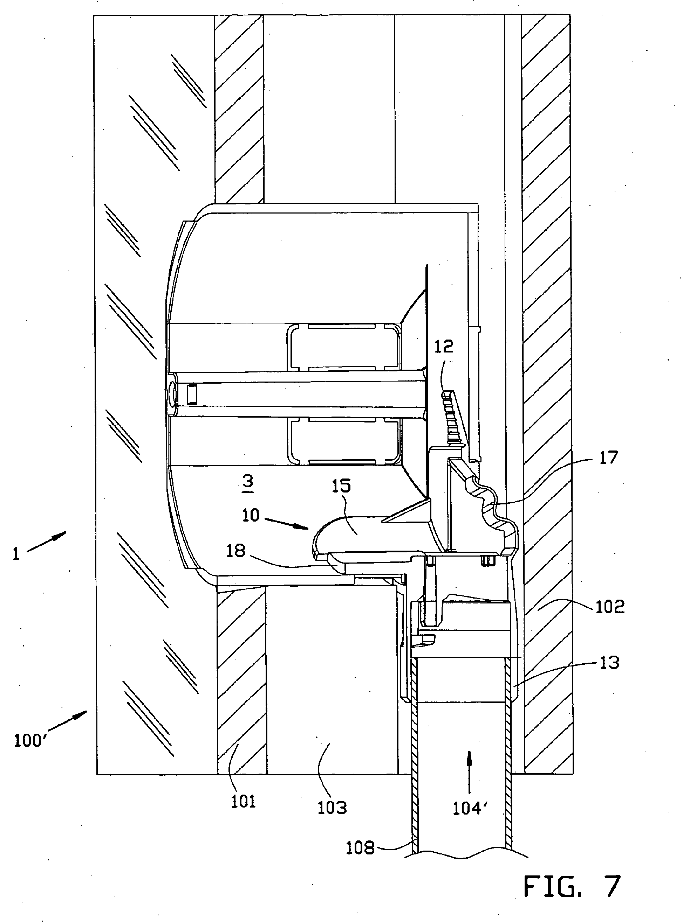

Because of the resilient action of the resilient strip 17, the spout 13 may also be inserted into a channel 104' that is loataed deeper, as shown in figure 7. Then the spout 13 may spring outwards beyond the plane of the bottom 2 of the installation box 1. In both positions the connecting wall 18 keeps the additional accommodation part 7 sealed off.

In another, not depicted, opposite ultimate extended position the spout 13 may have been placed in the direction of the placement edge, wherein the spout 13 is partially accommodated in the additional accommodation opening 7.

## Claims

1. Installation box (1) comprising a bottom wall (2) and a circumferential wall (3) bounding an installation opening (4), and an individually or separately insert piece (10) that can be placed from the inside of the installation box (1) and that has a placement member (11, 15) and a spout, (13) **characterised in that** the insert piece (10) is adapted for movement of the spout (13) with respect to the placement member (11, 15) for positioning the spout (13) with respect to the bottom wall (2) and/or the circumferential wall (3) of the installation box (1).

2. Installation box (1) according to claim 1, wherein the spout (13) is resiliently movable with respect to the placement member (11, 15).

3. Installation box (1) according to claim 1 or 2, wherein the spout (13) in the placed condition of the insert piece (10) is movable in a direction (A) transverse to the plane of the installation opening (4) of the installation box, wherein the spout (13) preferably is movable with respect to the placement member (11, 15) to a position in which a sleeve (13) of the spout is at least partially situated below the plane of the bottom wall (2) of the installation box (1).

4. Installation box (1) according to any one of the preceding claims, wherein the spout (13) is movable with an equally remaining spatial orientation with respect to the placement member (11, 15).

5. Installation box (1) according to any one of the preceding claims, wherein the spout (13) is connected to the placement member (11, 15) via a resilient strip or bending strip (17), wherein preferably in the direction of the spout (13) the resilient strip has a corrugated profile, wherein the resilient strip or bending strip preferably is part of a bottom plate (11) of the insert piece (10), which bottom plate connects to the bottom wall (2) of the installation box.

6. Installation box (1) according to any one of the preceding claims, comprising a recess (9) having a continuous bounding edge in a portion of the bottom wall (2) and the circumferential wall (3) for accommodation of the placement member (10), wherein the placement member comprises one or more shoulder edges (16a-c) for a clamping engagement onto the bounding edge of the recess (9).

7. Installation box (1) according to any one of the preceding claims, wherein the spout (13) and the placement member (11, 15) comprise cooperating guides (40, 44), preferably rectilinear guides, preferably tongue-and-groove guides for guiding the movement of the spout (13) with respect to the placement member (11, 15), wherein preferably at one side the spout (13) is connected to the placement member (11, 15) via a resilient strip or bending strip (17), wherein the resilient strip and the connection to the spout allow a movement of the spout (13) with respect to the placement member (11, 15) for bringing the guides in cooperation.

8. Installation box (1) according to claim 7, wherein the spout (13) and the placement member (11,15) comprise cooperating stops (43) for limiting a movement of the spout (13) which movement takes place with respect to the placement member (11,15) and which is guided by the guides (40, 44).

9. Installation box (1) according to any one of the preceding claims, wherein the spout (13) comprises a sealing wall part (11) which extends in movement direction (A) and which is in placed condition of the insert piece (10) intended to abut the inside of the circumferential wall (3) of the installation box (1).

10. Installation box (1) according to claim 8 and 9, wherein the stops (43) abut the spout at the sealing wall part (11).

11. Installation box (1) according to any one of the preceding claims, wherein the placement member (11, 15), the spout (9) and preferably the resilient strip (17) are formed as one piece.

12. Installation box (1) according to any one of the preceding claims, wherein the placement member (11,15) comprises a preferably ribbed grip lip (12) for handing the insert piece (10), wherein the grip lip (12) after placement in the installation box (1) is preferably raised from the bottom wall (2) of the installation box, wherein the grip lip (12) preferably is integrally formed with a side of the insert piece (10) that faces away from the spout (13).

13. Installation box (1) according to any one of the preceding claims, wherein the insert piece (10) is made of synthetic material, preferably by means of injection moulding.

14. Insert piece (10) for an installation box (1), comprising a placement member (11, 15) for connection to a wall (2, 3) of the installation box (1), and a spout (13) integrally formed with the placement member (11, 15), **characterised in that** the spout (13) is movably connected to the placement member (4, 15), preferably elastically, for movement with an equally remaining spacial orientation with respect to the placement member (11, 15).

## Patentansprüche

1. Installationsdose (1), enthaltend eine Bodenwand (2) und eine Umfangswand (3), die an eine Installationsöffnung (4) grenzt, und ein einzeln oder getrennt platzierbares Einsatzstück (10), das von der Innenseite der Installationsdose (1) angeordnet werden kann und das ein Anordnungselement (11, 15) sowie einen Stutzen (13) hat, **dadurch gekennzeichnet, dass** das Einsatzstück (10) so eingerichtet ist, dass der Stutzen (13) im Bezug auf das Anordnungselement (11, 15) bewegt werden kann, um den Stutzen (13) im Bezug auf die Bodenwand (2) und/oder die Umfangswand (3) der Installationsdose (1) zu bewegen.

2. Installationsdose (1) nach Anspruch 1, bei der der Stutzen (13) im Bezug aus das Anordnungselement (11, 15) federnd bewegt werden kann.

3. Installationsdose (1) nach Anspruch 1 oder 2, bei der der Stutzen (13) im angeordneten Zustand des Einsatzstückes (10) in einer Richtung (A) quer zur Ebene der Installationsöffnung (4) der Installationsdose bewegt werden kann, wobei der Stutzen (13) vorzugsweise im Bezug auf das Anordnungselement (11, 15) in eine Stellung bewegt werden kann, in der sich eine Manschette (13) des Stutzens wenigstens teilweise unter der Ebene der Bodenwand (2) der Installationsdose (1) befindet.

4. Installationsdose (1) nach einem der vorhergehenden Ansprüche, bei der der Stutzen (13) mit einer in entsprechender Weise verbleibenden räumlichen Ausrichtung im Bezug auf das Anordnungselement (11, 15) bewegt werden kann.

5. Installationsdose (1) nach einem der vorhergehenden Ansprüche, bei der der Stutzen (13) mit dem Anordnungselement (11, 15) über einen elastischen Streifen oder einen Biegestreifen (17) verbunden ist, wobei der elastische Streifen vorzugsweise in der Richtung des Stutzens (13) ein geriffeltes Profil hat und der elastische Streifen oder der Biegestreifen vorzugsweise Teil einer Bodenplatte (11) des Einsatzstückes (10) ist, wobei diese Bodenplatte mit der Bodenwand (2) der Installationsdose verbunden ist.

6. Installationsdose (1) nach einem der vorhergehenden Ansprüche, enthaltend eine Aussparung (9), die einen kontinuierlichen Begrenzungsrand in einem Abschnitt der Bodenwand (2) und der Umfangswand (3) hat, um das Anordnungselement (10) aufzunehmen, wobei das Anordnungselement eine oder mehrere Anschlagränder (16a-c) für einen Klemmeingriff am Begrenzungsrand der Aussparung (9) enthält.

7. Installationsdose (1) nach einem der vorhergehenden Ansprüche, bei der der Stutzen (13) und das Anordnungselement (11, 15) zusammenwirkende Führungen (40, 44), vorzugsweise geradlinige Führungen, vorzugsweise Nut-und-Feder-Führungen enthalten, die die Bewegung des Stutzens (13) im Bezug auf das Anordnungselement (11, 15) führen, wobei der Stutzen (13) vorzugsweise auf einer Seite mit dem Anordnungselement (11, 15) über einen elastischen Streifen oder einen Biegestreifen (17) verbunden ist und der elastische Streifen sowie die Verbindung mit dem Stutzen eine Bewegung des Stutzens (13) im Bezug auf das Anordnungselement (11, 15) gestatten, um die Führungen zur Zusammenwirkung zu bringen.

8. Installationsdose (1) nach Anspruch 7, bei der der Stutzen (13) und das Anordnungselement (11, 15) zusammenwirkende Anschläge (43) enthalten, die eine Bewegung des Stutzens (13) begrenzen, wobei diese Bewegung im Bezug auf das Anordnungselement (11, 15) erfolgt und durch die Führungen (40, 44) geführt ist.

9. Installationsdose (1) nach einem der vorhergehenden Ansprüche, bei der der Stutzen (13) einen verschließenden Wandteil (11) enthält, der sich in Bewegungsrichtung (A) erstreckt und der bei angeordnetem Zustand des Einsatzstückes (10) an die Innenseite der Umfangswand (3) der Installationsdose (1) anschlagen soll.

10. Installationsdose (1) nach Anspruch 8 und 9, bei der die Anschläge (43) an den Stutzen an dem verschließenden Wandteil (11) anschlagen.

11. Installationsdose (1) nach einem der vorhergehenden Ansprüche, bei der das Anordnungselement (11, 15), der Stutzen (13) und vorzugsweise der elastische Streifen (17) als ein Stück ausgebildet sind.

12. Installationsdose (1) nach einem der vorhergehenden Ansprüche, bei der das Anordnungselement (11, 15) eine vorzugsweise gerippte Grifflippe (12) zur Handhabung des Einsatzstückes (10) enthält, wobei die Grifflippe (12) nach der Anordnung in der Installationsdose (1) vorzugsweise von der Bodenwand (2) der Installationsdose hervorragt und die Grifflippe (12) vorzugsweise integral mit einer Seite des Einsatzstückes (10) ausgebildet ist, die dem Stutzen (13) abgewandt ist.

13. Installationsdose (1) nach einem der vorhergehenden Ansprüche, bei der das Einsatzstück (10) aus einem synthetischen Material vorzugsweise durch Spritzgießen ausgebildet ist.

14. Einsatzstück (10) für eine Installationsdose (1), enthaltend ein Anordnungselement (11, 15) für die Verbindung mit einer Wand (2, 3) der Installationsdose (1) und einen Stutzen (13), der integral mit dem Anordnungselement (11, 15) ausgebildet ist, **dadurch gekennzeichnet, dass** der Stutzen (13) vorzugsweise elastisch beweglich mit dem Anordnungselement (11, 15) für eine Bewegung mit in entsprechender Weise verbleibender räumlicher Ausrichtung im Bezug auf das Anordnungselement (11, 15) verbunden ist.

## Revendications

1. Boîtier d'installation (1) comprenant une paroi de fond (2) et une paroi circonférentielle (3) délimitant une ouverture d'installation (4), et un insert (10) pouvant être placé individuellement ou séparément, qui peut être placé depuis l'intérieur du boîtier d'installation (1) et qui comporte un élément de placement (11, 15) et un bec (13), **caractérisé en ce que** l'insert (10) est conçu pour un déplacement du bec (13) par rapport à l'élément de placement (11, 15) pour positionner le bec (13) par rapport à la paroi de fond (2) et/ou la paroi circonférentielle (3) du boîtier d'installation (1).

2. Boîtier d'installation (1) selon la revendication 1, dans lequel le bec (13) est mobile élastiquement par rapport à l'élément de placement (11, 15).

3. Boîtier d'installation (1) selon la revendication 1 ou 2, dans lequel le bec (13), dans la condition placée de l'insert (10), est mobile dans une direction (A) transversale au plan de l'ouverture d'installation (4) du boîtier d'installation, dans lequel le bec (13) est, de préférence, mobile par rapport à l'élément de placement (11, 15) jusqu'à une position dans laquelle un manchon (13) du bec est, au moins en partie, situé partiellement au-dessous du plan de la paroi de fond (2) du boîtier d'installation (1).

4. Boîtier d'installation (1) selon l'une quelconque des revendications précédentes, dans lequel le bec (13) est mobile avec une orientation spatiale demeurant égale par rapport à l'élément de placement (11, 15).

5. Boîtier d'installation (1) selon l'une quelconque des revendications précédentes, dans lequel le bec (13) est relié à l'élément de placement (11, 15) via une bande élastique ou bande de flexion (17), dans lequel, de préférence dans la direction du bec (13), la bande élastique ou la bande de flexion a un profil ondulé, dans lequel la bande élastique ou bande de flexion fait, de préférence, partie d'une plaque de fond (11) de l'insert (10), laquelle plaque de fond se relie à la paroi de fond (2) du boîtier d'installation.

6. Boîtier d'installation (1) selon l'une quelconque des revendications précédentes, comprenant un évidement (9) ayant un bord de délimitation continu dans une partie de la paroi de fond (2) et la paroi circonférentielle (3) pour logement de l'élément de placement (10), l'élément de placement comprenant un ou plusieurs bords d'épaulements (16 a-c) pour un engagement par serrage sur le bord de délimitation de l'évidement (9).

7. Boîtier d'installation (1) selon l'une quelconque des revendications précédentes, dans lequel le bec (13) et l'élément de placement (11, 15) comprennent des guides de coopération (40, 44), de préférence des guides rectilignes, de préférence des guides à rainure et languette, pour guider le déplacement du bec (13) par rapport à l'élément de placement (11, 15), où, de préférence sur un côté, le bec (13) est relié à l'élément de placement (11, 15) via une bande élastique ou bande de flexion (17), où la bande élastique et la connexion au bec permettent un déplacement du bec (13) par rapport à l'élément de placement (11, 15) pour amener les guides en coopération.

8. Boîtier d'installation (1) selon la revendication 7, dans lequel le bec (13) et l'élément de placement (11, 15) comprennent des butées de coopération (43) pour limiter un déplacement du bec (13), lequel déplacement se fait par rapport à l'élément de placement (11, 15) et est guidé par les guides (40, 44).

9. Boîtier d'installation (1) selon l'une quelconque des revendications précédentes, dans lequel le bec (13) comprend une partie formant paroi d'étanchement (11) qui s'étend dans la direction (A) du mouvement et qui est, dans la condition placée de l'insert (10), destinée à buter contre l'intérieur de la paroi circonférentielle (3) du boîtier d'installation (1).

10. Boîtier d'installation (1) selon la revendication 8 et la revendication 9, dans lequel les butées (43) butent contre le bec au niveau de la partie formant paroi d'étanchement (11).

11. Boîtier d'installation (1) selon l'une quelconque des revendications précédentes, dans lequel l'élément de placement (11, 15), le bec (13) et, de préférence, la bande élastique (17) sont formés en une seule pièce.

12. Boîtier d'installation (1) selon l'une quelconque des revendications précédentes, dans lequel l'élément de placement (11, 15) comprend une bordure de préhension de préférence nervurée (12) pour tenir l'insert (10), où la bordure de préhension (12), après placement dans le boîtier d'installation (1) est, de préférence, surélevée par rapport à la paroi de fond (2) du boîtier d'installation, où la bordure de préhension (12) est, de préférence, formée d'un seul tenant avec un côté de l'insert (10) qui est tourné loin du bec (13).

13. Boîtier d'installation (1) selon l'une quelconque des revendications précédentes, dans lequel l'insert (10) est fait d'un matériau synthétique, de préférence au moyen d'un moulage par injection.

14. Insert (10) pour boîtier d'installation (1), comprenant un élément de placement (11, 15) pour connexion à une paroi (2, 3) du boîtier d'installation (1), et un bec (13) formé d'un seul tenant avec l'élément de placement (11, 15), **caractérisé en ce que** le bec (13) est relié, de manière mobile, à l'élément de placement (11, 15), de préférence élastiquement, pour déplacement avec une orientation spatiale demeurant égale par rapport à l'élément de placement (11, 15).
